# FASCICULE DE BREVET EUROPEEN

(11) **EP 1 671 566 B1**
(45) Date de publication et mention de la délivrance du brevet: **08.10.2014**
(21) Numéro de dépôt: 05356160.1
(22) Date de dépôt: 14.09.2005
(51) Int. Cl.: A47J 43/046, A47J 43/07

(54) **Appareil électroménager de préparation culinaire prévu pour la réalisation de préparations liquides**
Haushaltsgerät zum Bereiten von Nahrungsmitteln zur Herstellung flüssiger Zubereitungen
Electrical household appliance for preparing food for realising liquid preparations

(30) Priorité: 16.12.2004 FR 0413382
(43) Date de publication de la demande: 21.06.2006
(73) Titulaire: SEB SA, 69130 Ecully (FR)
(72) Inventeur: Galban, Rémi, 65420 Ibos (FR); Suberbie, Marc, 65360 Momeres (FR)
(74) Mandataire: Kiehl, Hubert

(56) Documents cités:
- DE-A1- 19 645 312
- FR-A- 2 707 187
- FR-A5- 2 142 213

## Description

La présente invention se rapporte au domaine technique général des appareils électroménagers de préparation culinaire.

La présente invention concerne plus particulièrement les appareils électroménagers de préparation culinaire comprenant un boîtier moteur, un récipient de travail comportant une cheminée, placé sur le boîtier moteur, un outil de travail rotatif tournant dans le récipient de travail, et un couvercle prévu pour fermer le récipient de travail.

Dans les appareils de ce type, le récipient de travail est amovible du boîtier moteur. L'outil de travail rotatif est amovible par rapport au récipient de travail. L'outil de travail rotatif comporte une paroi tubulaire présentant une ouverture inférieure, prévue pour coiffer la cheminée. La cheminée permet le passage de l'entraînement de l'outil de travail rotatif. L'outil de travail rotatif comporte également un organe d'entraînement inférieur prévu pour coopérer avec un axe d'entraînement issu du boîtier moteur. Un appareil du type précité est connu du document WO 98/43522.

Un inconvénient de ces appareils est leur mauvaise adaptation à la réalisation de préparations liquides, du fait du risque d'une remontée de liquide le long de la paroi extérieure de la cheminée et d'un écoulement de liquide par la cheminée sur le boîtier moteur.

Un appareil électroménager de préparation culinaire selon le préambule de la revendication 1 est connu du document DE 1 96 45 312, ou de FR 2707187.

Un objet de la présente invention est de proposer un appareil électroménager de préparation culinaire du type précité permettant la réalisation de préparations liquides dans une enceinte fermée sans limitation excessive du volume préparé.

Cet objet est atteint avec un appareil électroménager de préparation culinaire selon les caractéristiques de la revendication 1.

Le tube est prévu pour coiffer la cheminée lorsque l'outil de travail rotatif est en place dans le récipient de travail. L'organe d'entraînement inférieur est alors entraîné par l'axe entraîneur. Grâce au passage, l'évent permet de mettre le volume d'air présent entre le récipient et le couvercle en communication avec la cheminée lorsque le tube plonge dans du liquide. Les remontées de liquide entre le tube et la cheminée, lorsque l'utilisateur rapproche le couvercle du récipient, peuvent ainsi être évitées.

Selon une forme de réalisation avantageuse, l'enceinte formée par le récipient de travail et le couvercle comporte un joint d'étanchéité. Cette disposition facilite l'obtention d'une bonne étanchéité entre le couvercle et le récipient de travail.

Selon une autre forme de réalisation avantageuse, le couvercle comporte un rebord inférieur venant se loger contre un bord supérieur du récipient de travail, le rebord inférieur et le bord supérieur présentant un jeu réduit. Bien que l'étanchéité obtenue avec une telle construction soit moindre, l'augmentation de la pression dans l'enceinte lors de la mise en place du couvercle sur le récipient de travail peut être suffisante pour provoquer une remontée de liquide le long de la cheminée, ce qui rend intéressante l'utilisation d'un outil de travail présentant les caractéristiques précitées.

Selon une forme de réalisation avantageuse, l'organe d'entraînement inférieur est raccordé au tube au-dessus de l'évent. Le passage est ainsi agencé en périphérie ou en-dessous de l'organe d'entraînement inférieur.

Selon une autre forme de réalisation avantageuse, l'organe d'entraînement inférieur est ménagé sur la face interne d'une paroi du tube. Le passage peut alors consister par exemple en une rainure ménagée dans la face interne d'une paroi du tube, ou en un conduit mettant en relation l'évent à l'ouverture axiale inférieure.

Avantageusement alors, pour permettre de traiter une quantité plus importante de liquide, l'évent est agencé dans le tiers supérieur du moyeu.

Avantageusement encore, pour faciliter l'échappement de l'air, l'évent forme une ouverture supérieure dans la paroi extérieure du moyeu.

Avantageusement encore, pour faciliter l'échappement de l'air, l'outil de travail rotatif comporte deux évents disposés de part et d'autre de l'axe du moyeu.

Avantageusement encore, le moyeu porte un organe de travail. L'organe de travail peut être amovible ou non. En alternative ou en complément, le moyeu présente un organe de retenue prévu pour recevoir un organe de travail amovible.

Avantageusement encore, l'évent est agencé au dessus de la cheminée. L'évent n'est pas nécessairement disposé à l'aplomb de la cheminée, mais peut être disposé latéralement. Cette disposition facilite l'échappement de l'air.

Avantageusement alors, le boîtier moteur comporte une tige de commande prévue pour actionner un interrupteur, la tige de commande étant actionnée par l'intermédiaire du couvercle. L'appareil présente ainsi un fonctionnement particulièrement simple.

L'invention sera mieux comprise à l'étude des trois exemples de réalisation suivants, pris à titre nullement limitatif, illustrés dans les figures annexées, dans lesquelles :
- la figure 1 est une vue en perspective en coupe verticale d'un exemple de réalisation d'un outil de travail rotatif appartenant à l'invention,
- la figure 2 est une vue en perspective de l'outil de travail rotatif illustré à la figure 1,
- la figure 3 est une vue en coupe verticale d'un exemple de réalisation d'un appareil électroménager de préparation culinaire selon l'invention, comportant l'outil de travail rotatif illustré aux figures 1 et 2,
- la figure 4 est une vue partielle en coupe verticale d'un deuxième exemple de réalisation d'un appareil électroménager de préparation culinaire selon l'invention,
- la figure 5 est une vue partielle en coupe verticale d'un troisième exemple de réalisation d'un appareil électroménager de préparation culinaire selon l'invention.

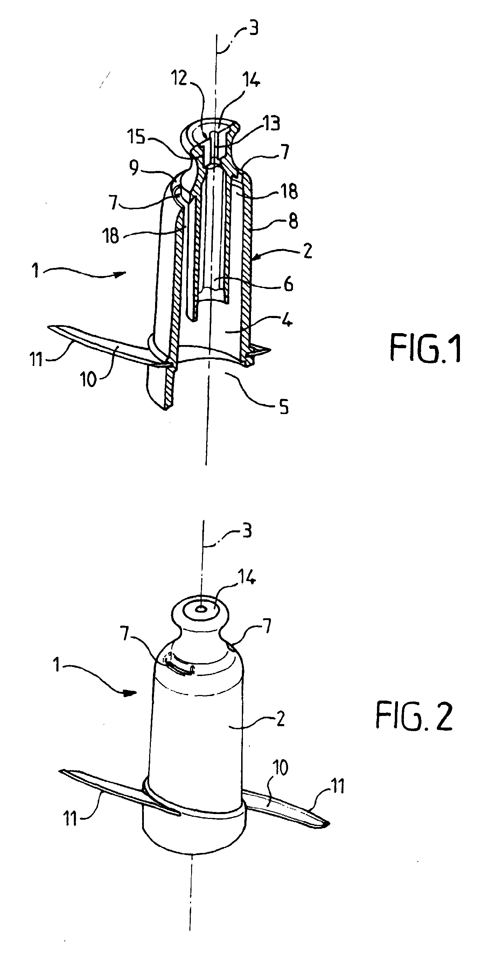

L'outil de travail rotatif 1 illustré aux figures 1 et 2 comprend un moyeu 2 allongé selon un axe 3. Le moyeu 2 forme un tube 4 présentant une ouverture axiale inférieure 5. L'outil de travail rotatif 1 porte un organe de travail 10 tel qu'une lame coupante présentant deux parties tranchantes 11. L'organe de travail 10 est solidaire du moyeu 2. L'outil de travail rotatif 1 comprend un organe d'entraînement inférieur 6 agencé à l'intérieur du tube 4.

Deux évents 7 sont agencés dans une paroi extérieure 8 du moyeu 2. Les évents 7 sont reliés à l'ouverture axiale inférieure 5 par un passage 18. Le passage 18 est distinct de l'organe d'entraînement inférieur 6. Plus particulièrement le passage 18 est agencé en périphérie de l'organe d'entraînement inférieur 6. Le passage 18 est annulaire. L'organe d'entraînement inférieur 6 est raccordé au tube 4 au-dessus des évents 7. L'organe d'entraînement inférieur 6 est tubulaire.

Les évents 7 sont agencés dans le tiers supérieur du moyeu 2. Chacun des évents 7 forme une ouverture supérieure dans la paroi extérieure 8. Les deux évents sont disposés de part et d'autre de l'axe 3 du moyeu 2. Le moyeu 2 présente un épaulement 9 dans la partie supérieure du tube 4. Les évents 7 sont agencés au niveau de l'épaulement 9.

L'outil de travail rotatif 1 comporte un organe de guidage supérieur 12. Plus particulièrement, l'organe de guidage supérieur 12 est formé par un alésage 13 ménagé dans un manchon 14 engagé dans un logement axial supérieur 15 du moyeu 2.

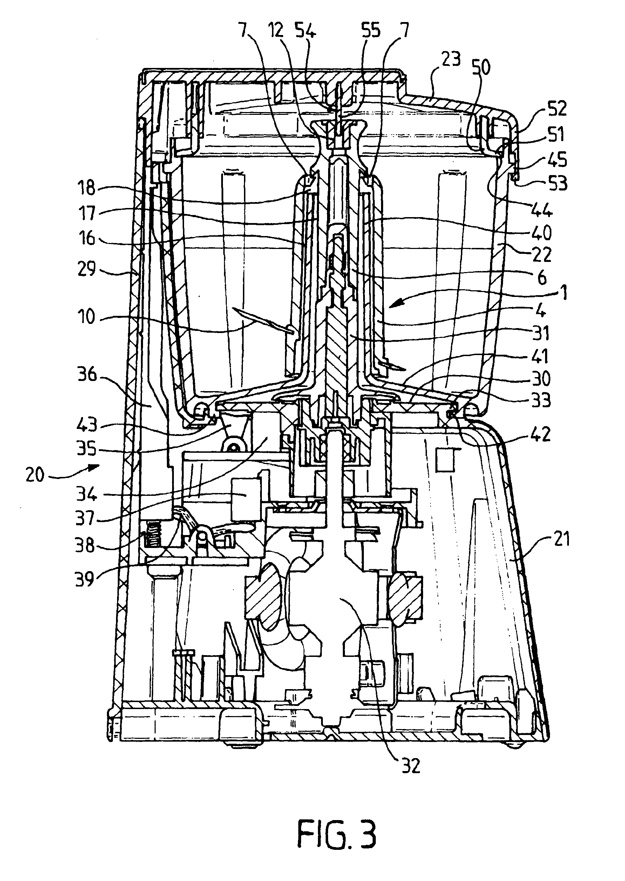

La figure 3 montre l'outil de travail rotatif 1 agencé dans un appareil électroménager de préparation culinaire 20 comprenant un boîtier moteur 21, un récipient de travail 22, et un couvercle 23.

Le boîtier moteur 21 forme un socle 30 et comporte un axe entraîneur 31 proéminent par rapport au socle 30. Un moteur 32 agencé dans le boîtier moteur 21 entraîne en rotation l'axe entraîneur 31. Le récipient de travail 22 comporte une cheminée 40 issue d'un fond 41.

Lorsque l'outil de travail rotatif 1 est disposé dans le récipient de travail 22 en place sur le socle 30, le tube 4 de l'outil de travail rotatif 1 coiffe la cheminée 40 et l'organe d'entraînement inférieur 6 est entraîné par l'axe entraîneur 31. Les évents 7 sont avantageusement agencés au-dessus de la cheminée 40. Un espace annulaire extérieur 16 est présent entre le tube 4 et la cheminée 40. Un espace annulaire intérieur 17 est présent entre la cheminée 40 et l'axe entraîneur 31 surmonté de l'organe d'entraînement inférieur 6. L'espace annulaire extérieur 16 communique avec l'espace annulaire intérieur 17.

Le récipient de travail 22 comporte des ergots 42 prévus pour être engagés dans des encoches 33 ménagées dans le socle 30, pour verrouiller le récipient de travail 22 sur le boîtier moteur 21 au moyen d'un assemblage de type baïonnette.

Le récipient de travail 22 comporte une patte 43 prévue pour actionner un interrupteur 34 agencé dans le boîtier moteur pour interdire le fonctionnement de l'appareil en l'absence du récipient de travail 22. Plus particulièrement, la patte 43 actionne l'interrupteur 34 par l'intermédiaire d'une pièce de transmission 35.

Le couvercle 23 comporte un joint d'étanchéité 50 prévu pour coopérer avec le récipient de travail 22. Le joint d'étanchéité 50 comporte une lèvre inférieure 51 prévue pour prendre appui sur un épaulement interne 44 du récipient de travail 22. Le couvercle 23 est mis en place sur le récipient de travail 22 par rotation.

Le couvercle 23 présente une jupe 52 comportant des ergots internes 53 prévus pour être engagés sous des ergots externes 45 du récipient de travail 22. Le joint d'étanchéité 50 occupe alors une position légèrement comprimée. Le couvercle 23 fermant le récipient de travail 22 est mobile en direction du récipient de travail 22.

Le couvercle 23 comporte un organe de centrage 54 prévu pour coopérer avec l'organe de guidage supérieur 12 de l'outil de travail rotatif 1. L'organe de centrage 54 est formé par une tige 55 prévue pour s'engager dans l'alésage 13.

Le boîtier moteur 21 comporte une tige de commande 36 prévue pour actionner un interrupteur 37. La tige de commande 36 est montée contre un ressort de rappel 38. Plus particulièrement, la tige de commande 36 actionne l'interrupteur 37 par l'intermédiaire d'une pièce de transmission 39. La tige de commande est agencée dans un montant 29 du boîtier moteur 21.

La tige de commande 36 est actionnée par l'intermédiaire du couvercle 23. Lorsque le couvercle 23 est en place sur le récipient de travail 22 disposé sur le socle 30, une pression sur le couvercle 23 permet de faire fonctionner l'appareil.

La présente réalisation fonctionne de la manière suivante. L'utilisateur met en place le récipient de travail 22 sur le socle 30, puis l'outil de travail 1 dans le récipient de travail 22, et verse du liquide dans le récipient de travail 22. L'utilisateur met ensuite en place le couvercle 23 sur le récipient de travail 22 et appuie sur le couvercle 23 pour faire fonctionner l'appareil. Le joint 50 permet la diminution du volume de l'enceinte formée par le récipient de travail 22 et le couvercle 23 tout en conservant une étanchéité. L'air présent au dessus du liquide peut alors s'échapper par les évents 7 puis par le passage 18 pour atteindre la cheminée 40 et sortir de l'appareil. En l'absence d'évent, le liquide présent dans le récipient de travail 22 tendrait à remonter par l'espace annulaire extérieur 16 entre le tube 4 et la cheminée 40, pour s'écouler le cas échéant dans la cheminée 40 par l'espace annulaire intérieur 17.

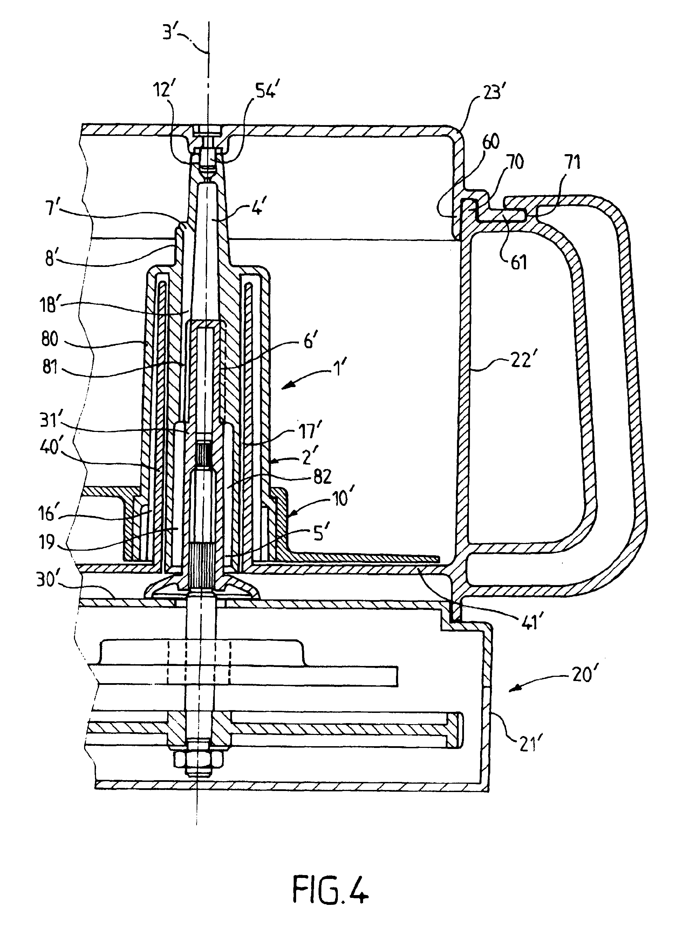

L'appareil électroménager de préparation culinaire 20' illustré à la figure 4 comprend un boîtier moteur 21', un récipient de travail 22', et un couvercle 23'.

Le boîtier moteur 21' forme un socle 30' et comporte un axe entraîneur 31' proéminent par rapport au socle 30'. Un moteur (non visible à la figure 4) agencé dans le boîtier moteur 21' entraîne en rotation l'axe entraîneur 31' par l'intermédiaire d'une transmission. Le fonctionnement de l'appareil est commandé par un bouton de commande (non visible à la figure 4).

Le récipient de travail 22' comporte une cheminée 40' issue d'un fond 41'. Le récipient de travail 22' est avantageusement verrouillé sur le socle 30' au moyen d'un assemblage de type baïonnette, non représenté à la figure 4.

Le couvercle 23' comporte un organe de centrage 54' prévu pour coopérer avec un organe de guidage supérieur 12' de l'outil de travail rotatif 1'.

Le couvercle 23' est dépourvu de joint. Le couvercle 23' comporte un rebord inférieur 60 venant se loger contre un bord supérieur 70 du récipient de travail 22'. Le couvercle 23' est verrouillé sur le récipient de travail 22' au moyen d'un assemblage de type baïonnette. A cet effet, une languette 61 issue du couvercle 23' s'engage dans un logement 71 du récipient de travail 22' après rotation du couvercle 23' par rapport au récipient de travail 22'.

L'outil de travail rotatif 1' comprend un moyeu 2' allongé selon un axe 3'. Le moyeu 2' forme un tube 4' présentant une ouverture axiale inférieure 5'. L'outil de travail rotatif 1' porte un organe de travail 10' monté amovible par rapport au moyeu 2'. Plus particulièrement l'organe de travail 10' est monté sur une paroi tubulaire 80 entourant le tube 4'.

L'outil de travail rotatif 1' comprend un organe d'entraînement inférieur 6' agencé à l'intérieur du tube 4'. L'organe d'entraînement inférieur 6' est tubulaire. Plus particulièrement l'organe d'entraînement inférieur 6' est ménagé sur la face interne d'une paroi du tube 4'.

Un évent 7' est agencé dans une paroi extérieure 8' du moyeu 2'. L'évent 7' forme une ouverture supérieure dans la paroi extérieure 8'. L'évent 7' est agencé dans le tiers supérieur du moyeu 2'. L'évent 7' est agencé au-dessus de la paroi tubulaire 80.

L'évent 7' est relié à l'ouverture axiale inférieure 5' par un passage 18'. Le passage 18' est distinct de l'organe d'entraînement inférieur 6'. Plus particulièrement le passage 18' consiste en une rainure 81 ménagée dans la face interne d'une paroi du tube 4', prolongée par un alésage 82 en direction de l'ouverture inférieure axiale 5'. La rainure 81 s'étend le long de l'organe d'entraînement inférieur 6'.

Lorsque l'outil de travail rotatif 1' est disposé dans le récipient de travail 22' en place sur le socle 30', le tube 4' de l'outil de travail rotatif 1' est inséré dans la cheminée 40' et l'organe d'entraînement inférieur 6' est entraîné par l'axe entraîneur 31'. L'évent 7' est avantageusement agencé au-dessus de la cheminée 40'. Un espace annulaire extérieur 16' est présent entre la paroi tubulaire 80 et la cheminée 40'. Un espace annulaire intérieur 17' est présent entre la cheminée 40' et le tube 4'. Un espace annulaire interne 19 est présent entre le tube 4' et l'axe entraîneur 31' surmonté de l'organe d'entraînement inférieur 6'. L'espace annulaire interne 19 communique avec le passage 18'.

La présente réalisation fonctionne de la manière suivante. L'utilisateur met en place le récipient de travail 22' sur le socle 30', puis l'outil de travail 1' dans le récipient de travail 22', et verse du liquide dans le récipient de travail 22'. L'utilisateur met ensuite en place le couvercle 23' sur le récipient de travail 22'. Le rebord inférieur 60 du couvercle 23' venant se loger contre le bord supérieur 70 du récipient de travail 22' entraîne une diminution du volume de l'enceinte formée par le récipient de travail 22' et le couvercle 23' tout en conservant une certaine étanchéité. En d'autres termes, le rebord inférieur 60 et le bord supérieur 70 présentent un jeu réduit. L'air présent au-dessus du liquide peut alors s'échapper par l'évent 7' puis par le passage 18' pour atteindre la cheminée 40' et sortir de l'appareil. En l'absence d'évent 7', le faible jeu existant entre le bord supérieur du récipient de travail 22' et le couvercle 23' risquerait d'être insuffisant pour permettre l'échappement de l'air présent au-dessus du liquide contenu dans le récipient de travail 22'. Le liquide présent dans le récipient de travail 22' tendrait alors à remonter par l'espace annulaire extérieur 16' entre la paroi tubulaire 80 et la cheminée 40', pour s'écouler le cas échéant dans la cheminée 40' par l'espace annulaire intérieur 17'.

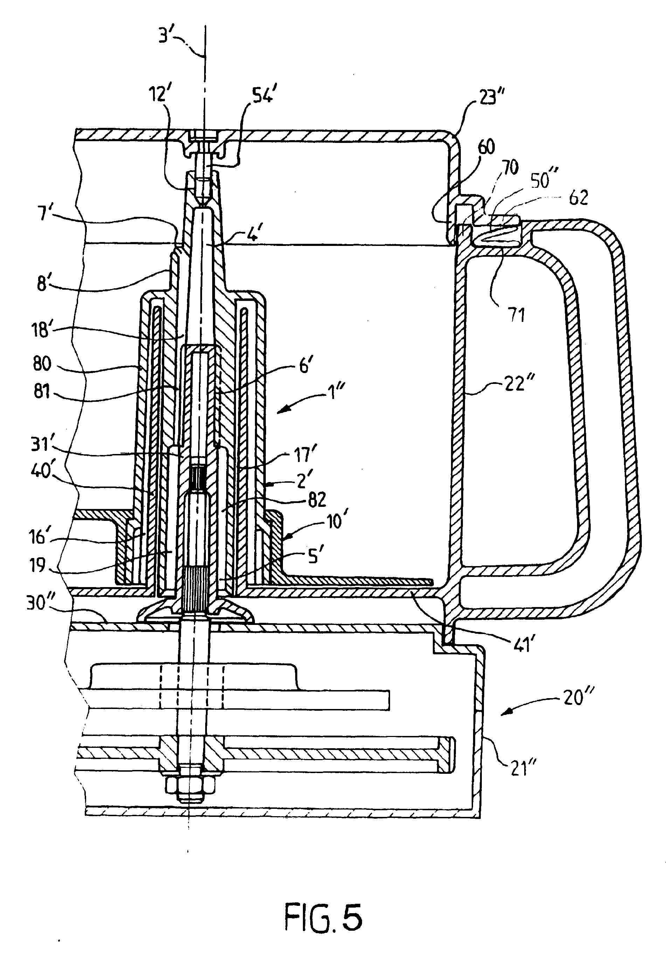

L'appareil électroménager de préparation culinaire 20" illustré à la figure 5 comporte un outil de travail 1" identique à l'outil de travail 1' de l'exemple de réalisation précédent.

Le boîtier moteur 21" diffère du boîtier moteur 21' en ce qu'il comporte une tige de commande prévue pour actionner un interrupteur, non représentés à la figure 5, comparables à ceux de l'exemple de réalisation illustré aux figures 1 à 3. Un joint d'étanchéité 50" est monté entre le récipient de travail 22" et le couvercle 23". A cet effet le récipient de travail 22" et le couvercle 23" diffèrent du récipient de travail 22' et du couvercle 23' en ce que le couvercle 23" présente une paroi annulaire 62 prévue pour reposer sur le joint d'étanchéité 50" agencé dans une gorge annulaire 71 du récipient de travail 22". La paroi annulaire 62 est agencée à l'extérieur du rebord inférieur 60 du couvercle 23". La gorge annulaire 71 est agencée en périphérie du bord supérieur 70 du récipient de travail 22". Plus particulièrement, le joint d'étanchéité 50" est un joint à lèvres.

La présente réalisation fonctionne de la manière suivante. Lorsque le couvercle 23" est en place sur le récipient de travail 22" disposé sur le socle 30" du boîtier moteur 21", une pression sur le couvercle 23" permet de faire fonctionner l'appareil. La paroi annulaire 62 du couvercle 23" venant comprimer le joint d'étanchéité 50" agencé dans la gorge annulaire 71 entraîne une diminution du volume de l'enceinte formée par le récipient de travail 22" et le couvercle 23" tout en conservant une certaine étanchéité. L'évacuation de l'air par l'évent 7' s'effectue de la même manière que dans l'exemple de réalisation précédent.

Ainsi grâce aux évents 7 ; 7' agencés dans la paroi extérieure 8 ; 8' du moyeu 2 ; 2' de l'outil de travail 1 ; 1' ; 1" reliés à l'ouverture axiale inférieure 5 ; 5' par un passage 18 ; 18' distinct de l'organe d'entraînement inférieur 6 ; 6', le couvercle 23 ; 23' ; 23" est susceptible d'être mis en place sur le récipient de travail 22 ; 22' ; 22" en entraînant une diminution du volume de l'enceinte formée par le récipient de travail et le couvercle tout en conservant une certaine étanchéité, sans provoquer de remontée de liquide le long de la cheminée 40 ; 40' du récipient de travail 22 ; 22' ; 22".

A titre de variante, le moyeu 2 peut comporter un seul évent 7, ou au contraire, le moyeu 2' peut comporter plusieurs évents 7'.

A titre de variante, le moyeu 2 peut porter un organe de travail amovible, ou au contraire, l'organe de travail 10' peut être solidaire du moyeu 2'.

A titre de variante, la cheminée 40, 40' peut être agencée à l'intérieur ou à l'extérieur du tube 4, 4' lorsque l'outil de travail rotatif 1 ; 1' ; 1" est disposé dans le récipient de travail 22 ; 22' ; 22" en place sur le socle 30 ; 30' ; 30".

A titre de variante, le passage 18' ne comporte pas nécessairement une rainure 81 ménagée dans la face interne d'une paroi du tube 4', mais peut comporter par exemple un conduit reliant l'évent 7' à l'alésage 82, ce conduit étant ménagé dans la paroi du tube 4'.

A titre de variante, les différentes constructions de l'outil de travail rotatif 1 ; 1' ; 1 ", de la liaison entre le couvercle 23 ; 23' ; 23" et le récipient de travail 22 ; 22' ; 22", ainsi que de la commande du fonctionnement de l'appareil peuvent être combinées entre elles.

A titre de variante, le joint d'étanchéité 50 peut former une pièce indépendante du couvercle 23, ou peut être prévu sur le récipient de travail 22. Le joint d'étanchéité 50 peut être amovible. Le joint d'étanchéité 50" peut être prévu sur le récipient de travail 22" ou sur le couvercle 23".

Le joint d'étanchéité 50 et le joint d'étanchéité 50" sont des joints à lèvre. Le joint d'étanchéité 50 et le joint d'étanchéité 50" sont des joints annulaires déformables axialement. Le joint d'étanchéité 50 et le joint d'étanchéité 50" peuvent être remplacés par d'autres types de joints annulaires déformables axialement, notamment un joint présentant une section en O.

La présente invention n'est nullement limitée aux exemples de réalisation décrits et à leurs variantes, mais englobe de nombreuses modifications dans le cadre des revendications.

## Revendications

1. Appareil électroménager de préparation culinaire comprenant un boîtier moteur (21 ; 21' ; 21 ") comportant un axe entraîneur (31 ; 31'), un récipient de travail (22 ; 22' ; 22") comportant une cheminée (40 ; 40'), un couvercle (23 ; 23' ; 23") et un outil de travail rotatif (1 ; 1' ; 1 ") comprenant un moyeu (2 ; 2') allongé selon un axe (3 ; 3'), le moyeu (2 ; 2') formant un tube (4 ; 4') présentant une ouverture axiale inférieure (5 ; 5'), le tube (4 ; 4') coiffant la cheminée (40 ; 40'), l'outil de travail rotatif (1 ; 1' ; 1 ") comprenant un organe d'entraînement inférieur (6 ; 6') agencé à l'intérieur du tube (4 ; 4'), l'organe d'entraînement inférieur (6 ; 6') étant entraîné par l'axe entraîneur (31 ; 31'), un évent (7 ; 7') agencé dans une paroi extérieure (8 ; 8') du moyeu (2 ; 2') étant relié à l'ouverture axiale inférieure (5 ; 5') par un passage (18 ; 18') distinct de l'organe d'entraînement inférieur (6 ; 6'), **caractérisé en ce que** l'extrémité supérieure de la cheminée (40 ; 40') s'élève au dessus de la mi-hauteur du récipient de travail (22 ; 22' ; 22"), **en ce que** le couvercle (23 ; 23' ; 23") est susceptible d'être mis en place sur le récipient de travail (22 ; 22' ; 22") en entraînant une diminution du volume de l'enceinte formée par le récipient de travail (22 ; 22' ; 22") et le couvercle (23 ; 23' ; 23"), la partie du couvercle (23 ; 23' ; 23") fermant ladite enceinte étant dépourvue d'ouverture, et **en ce que** l'évent (7 ; 7') permet un échappement de l'air hors de l'appareil par le passage (18 ; 18') et la cheminée (40 ; 40') lors de la mise en place du couvercle (23 ; 23' ; 23") sur le récipient de travail (22 ; 22' ; 22").

2. Appareil électroménager de préparation culinaire selon la revendication 1 **caractérisé en ce que** l'enceinte formée par le récipient de travail (22 ; 22") et le couvercle (23 ; 23") comporte un joint d'étanchéité (50 ; 50").

3. Appareil électroménager de préparation culinaire selon l'une des revendications 1 ou 2, **caractérisé en ce que** le couvercle (23' ; 23") comporte un rebord inférieur (60) venant se loger contre un bord supérieur (70) du récipient de travail (22' ; 22"), le rebord inférieur (60) et le bord supérieur (70) présentant un jeu réduit.

4. Appareil électroménager de préparation culinaire selon l'une des revendications 1 à 3, **caractérisé en ce que** l'organe d'entraînement inférieur (6) est raccordé au tube (4) au-dessus de l'évent (7).

5. Appareil électroménager de préparation culinaire selon l'une des revendications 1 à 4, **caractérisé en ce que** l'organe d'entraînement inférieur (6') est ménagé sur la face interne d'une paroi du tube (4').

6. Appareil électroménager de préparation culinaire selon l'une des revendications 1 à 5, **caractérisé en ce que** l'évent (7 ; 7') est agencé dans le tiers supérieur du moyeu (2 ; 2').

7. Appareil électroménager de préparation culinaire selon l'une des revendications 1 à 6, **caractérisé en ce que** l'évent (7 ; 7') forme une ouverture supérieure dans la paroi extérieure (8 ; 8') du moyeu (2 ; 2')

8. Appareil électroménager de préparation culinaire selon l'une des revendications 1 à 7, **caractérisé en ce qu'**il comporte deux évents (7) disposés de part et d'autre de l'axe (3) du moyeu (2).

9. Appareil électroménager de préparation culinaire selon l'une des revendications 1 à 8, **caractérisé en ce que** le moyeu (2 ; 2') porte un organe de travail (10 ; 10').

10. Appareil électroménager de préparation culinaire selon l'une des revendications 1 à 9, **caractérisé en ce que** l'évent (7 ; 7') est agencé au dessus de la cheminée (40 ; 40').

11. Appareil électroménager de préparation culinaire selon l'une des revendications 1 à 10, **caractérisé en ce que** le boîtier moteur (21) comporte une tige de commande (36) prévue pour actionner un interrupteur (39), la tige de commande (36) étant actionnée par l'intermédiaire du couvercle (23)

12. Appareil électroménager de préparation culinaire selon la revendication 11, **caractérisé en ce que** le couvercle (23) fermant le récipient de travail (22) est mobile en direction du récipient de travail (22).

## Patentansprüche

1. Elektrohaushaltsgerät zur Zubereitung von Speisen mit einem Motorgehäuse (21; 21'; 21"), das eine Antriebsachse (31; 31'), einen Arbeitsbehälter (22; 22'; 22") mit Entlüfterstutzen (40; 40'), eine Abdeckung (23; 23'; 23") und ein drehendes Arbeitswerkzeug (1; 1'; 1") mit einer Nabe (2; 2') umfasst, die sich entlang einer Achse (3; 3') erstreckt, wobei die Nabe (2; 2') ein Rohr (4; 4') ausbildet, das eine axial verlaufende, untere Öffnung (5; 5') aufweist, und wobei das Rohr (4; 4') auf den Entlüfterstutzen (40; 40') aufgesetzt ist und das drehende Arbeitswerkzeug (1; 1'; 1") ein unteres Antriebselement (6; 6') umfasst, das im Inneren des Rohrs (4; 4') angeordnet ist, wobei das untere Antriebselement (6; 6') über die Antriebsachse (31; 31') angetrieben wird und in eine Außenwand (8; 8') der Nabe (2; 2') eine Lüftungsöffnung (7; 7') eingelassen ist, die über eine von dem unteren Antriebselement (6; 6') getrennte Durchführung (18; 18') mit der axial verlaufenden, unteren Öffnung (5; 5') verbunden ist, **dadurch gekennzeichnet, dass** das obere Ende des Entlüfterstutzens (40; 40') über die halbe Höhe des Arbeitsbehälters (22; 22'; 22") hinausragt, und **dadurch gekennzeichnet, dass** die Abdeckung (23; 23'; 23") auf dem Arbeitsbehälter (22; 22'; 22") platziert werden kann, was eine Verringerung des Volumens des durch den Arbeitsbehälter (22; 22'; 22") und die Abdeckung (23; 23'; 23") begrenzten Raums bewirkt, wobei der Teil der Abdeckung (23; 23'; 23"), der als Abschluss dieses Raums dient, keinerlei Öffnung aufweist, und weiterhin **gekennzeichnet dadurch, dass** die Lüftungsöffnung (7; 7') ein Ausströmen von Luft aus dem Gerät über die Durchführung (18; 18') und den Entlüfterstutzen (40; 40') ermöglicht, wenn die Abdeckung (23; 23'; 23") auf dem Arbeitsbehälter (22; 22'; 22") platziert wird.

2. Elektrohaushaltsgerät zur Zubereitung von Speisen nach Anspruch 1, **dadurch gekennzeichnet, dass** der durch den Arbeitsbehälter (22; 22") und die Abdeckung (23; 23") begrenzte Raum mit einer Dichtung (50; 50") versehen ist.

3. Elektrohaushaltsgerät zur Zubereitung von Speisen nach Anspruch 1 oder 2, **dadurch gekennzeichnet, dass** die Abdeckung (23'; 23") einen unteren Rand (60) aufweist, der beim Einsetzen an den oberen Rand (70) des Arbeitsbehälters (22'; 22") angelegt wird, wobei zwischen dem unteren Rand (60) und dem oberen Rand (70) ein kleiner Zwischenraum verbleibt.

4. Elektrohaushaltsgerät zur Zubereitung von Speisen nach einem der Ansprüche 1 bis 3, **dadurch gekennzeichnet, dass** das untere Antriebselement (6) über der Lüftungsöffnung (7) mit dem Rohr (4) verbunden ist.

5. Elektrohaushaltsgerät zur Zubereitung von Speisen nach einem der Ansprüche 1 bis 4, **dadurch gekennzeichnet, dass** das untere Antriebselement (6) an der Innenseite einer Wand des Rohrs (4') angeordnet ist.

6. Elektrohaushaltsgerät zur Zubereitung von Speisen nach einem der Ansprüche 1 bis 5, **dadurch gekennzeichnet, dass** die Lüftungsöffnung (7; 7') im oberen Drittel der Nabe (2; 2') angeordnet ist.

7. Elektrohaushaltsgerät zur Zubereitung von Speisen nach einem der Ansprüche 1 bis 6, **dadurch gekennzeichnet, dass** die Lüftungsöffnung (7; 7') eine obere Öffnung in der Außenwand (8; 8') der Nabe (2; 2') bildet.

8. Elektrohaushaltsgerät zur Zubereitung von Speisen nach einem der Ansprüche 1 bis 7, **dadurch gekennzeichnet, dass** es zwei Lüftungsöffnungen (7) umfasst, die zu beiden Seiten der Achse (3) der Nabe (2) angeordnet sind.

9. Elektrohaushaltsgerät zur Zubereitung von Speisen nach einem der Ansprüche 1 bis 8, **dadurch gekennzeichnet, dass** die Nabe (2; 2') ein Arbeitswerkzeug trägt (10; 10').

10. Elektrohaushaltsgerät zur Zubereitung von Speisen nach einem der Ansprüche 1 bis 9, **dadurch gekennzeichnet, dass** die Lüftungsöffnung (7; 7') über dem Entlüfterstutzen (40; 40') angeordnet ist.

11. Elektrohaushaltsgerät zur Zubereitung von Speisen nach einem der Ansprüche 1 bis 10, **dadurch gekennzeichnet, dass** das Motorgehäuse (21) einen Steuerstift (36) umfasst, der zur Betätigung eines Schalters (39) vorgesehen ist, wobei der Steuerstift (36) über die Abdeckung (23) betätigt wird.

12. Elektrohaushaltsgerät zur Zubereitung von Speisen nach Anspruch 11, **dadurch gekennzeichnet, dass** die den Arbeitsbehälter (22) verschließende Abdeckung (23) in Richtung des Arbeitsbehälters (22) beweglich ist.

## Claims

1. Food preparation household electrical appliance comprising a motor housing (21; 21'; 21") having a drive shaft (31; 31'), a working receptacle (22; 22'; 22") having a chimney (40; 40'), a lid (23; 23'; 23") and a rotary working tool (1; 1'; 1") comprising an elongated hub (2; 2') along an axis (3; 3'), the hub (2; 2') forming a tube (4; 4') having a lower axial opening (5; 5'), the tube (4; 4') covering the chimney (40; 40'), the rotary working tool (1; 1'; 1") comprising a lower drive member (6; 6') arranged inside the tube (4; 4'), the lower drive member (6; 6') being driven by the drive shaft (31; 31'), a vent (7; 7') arranged in an outer wall (8; 8') of the hub (2; 2') being connected to the lower axial opening (5; 5') by a passage (18; 18') separate from the lower drive member (6; 6'), **characterised in that** the upper end of the chimney (40; 40') rises more than half-way up the working receptacle (22; 22'; 22"), **in that** the lid (23; 23'; 23") can be placed on the working receptacle (22; 22'; 22") resulting in a decrease in the volume of the chamber formed by the working receptacle (22; 22'; 22") and the lid (23; 23'; 23"), the part of the lid (23; 23'; 23") closing said chamber having no openings, and **in that** the vent (7; 7') allows air to escape outside the appliance through the passage (18; 18') and the chimney (40; 40') when the lid (23; 23'; 23") is placed on the working receptacle (22; 22'; 22").

2. Food preparation household electrical appliance according to claim 1, **characterised in that** the chamber formed by the working receptacle (22; 22") and the lid (23; 23") comprises a seal (50; 50").

3. Food preparation household electrical appliance according to claim 1 or 2, **characterised in that** the lid (23'; 23") has a lower edge (60) which fits against an upper edge (70) of the working receptacle (22'; 22"), the lower edge (60) and the upper edge (70) having reduced clearance.

4. Food preparation household electrical appliance according to one of claims 1 to 3, **characterised in that** the lower drive member (6) is connected to the tube (4) above the vent (7).

5. Food preparation household electrical appliance according to one of claims 1 to 4, **characterised in that** the lower drive member (6') is formed on the inside of a wall of the tube (4').

6. Food preparation household electrical appliance according to one of claims 1 to 5, **characterised in that** the vent (7; 7') is arranged in the upper third of the hub (2; 2').

7. Food preparation household electrical appliance according to one of claims 1 to 6, **characterised in that** the vent (7; 7') forms an upper opening in the outer wall (8, 8') of the hub (2; 2').

8. Food preparation household electrical appliance according to one of claims 1 to 7, **characterised in that** it comprises two vents (7) arranged on either side of the axis (3) of the hub (2).

9. Food preparation household electrical appliance according to one of claims 1 to 8, **characterised in that** hub (2; 2') carries a working member (10; 10').

10. Food preparation household electrical appliance according to one of claims 1 to 9, **characterised in that** the vent (7; 7') is arranged above the chimney (40; 40').

11. Food preparation household electrical appliance according to one of claims 1 to 10, **characterised in that** the motor housing (21) comprises a control rod (36) provided to actuate a switch (39), the control rod (36) being actuated via the lid (23).

12. Food preparation household electrical appliance according to claim 11, **characterised in that** the lid (23) closing the working receptacle (22) can move towards the working receptacle (22).
